# EUROPEAN PATENT SPECIFICATION

(11) **EP 3 839 283 B1**
(45) Date of publication and mention of the grant of the patent: **03.01.2024**
(21) Application number: 20211417.9
(22) Date of filing: 03.12.2020
(51) Int. Cl.: F16D 13/64

(54) **PROGRESSIVITY DEVICE FOR FRICTION CLUTCH DISK AND FRICTION CLUTCH DISK INTEGRATING A DEVICE OF THAT KIND**
PROGRESIVITÄTSVORRICHTUNG FÜR EINE REIBUNGSKUPPLUNGSSCHEIBE UND REIBUNGSKUPPLUNGSSCHEIBE DIE EINE SOLCHE VORRICHTUNG INTERGRIERT
DISPOSITIF DE PROGRESSIVITÉ POUR DISQUE DE FRICTION D'EMBRAYAGE ET DISQUE DE FRICTION INTÉGRANT UN TEL DISPOSITIF

(30) Priority: 19.12.2019 IN 201941052905
(43) Date of publication of application: 23.06.2021
(73) Proprietor: Amalgamations Valeo Clutch Private Limited, 602015 Chennai (IN)
(72) Inventor: UDAYASHANKAR, Arunn, 600130 CHENNAI TAMIL NADU (IN); CHINNASAMY, Venkatachalam, 602015 CHENNAI (IN)
(74) Representative: Valeo Powertrain Systems

(56) References cited:
- DE-A1-102017 102 197
- GB-A- 1 418 890
- GB-A- 2 140 881

## Description

The present invention relates to a progressivity device for a friction clutch disk for a motor vehicle. The motor vehicle may be a so-called industrial vehicle, for example a heavy-duty vehicle, a public transport vehicle or an agricultural vehicle.

The invention more precisely concerns an improvement to clutches of the type including a friction clutch disk mounted on the input shaft of the gearbox and coming to bear on a driving flywheel in an engaged position. A clutch mechanism fixed to the driving flywheel, also called an inertia flywheel, applies a clamping force to the clutch disk in such a manner as to transmit the torque produced by the engine.

Friction clutch disks conventionally include annular friction facings or segment-shaped friction pads fixed to a support, itself mounted on a torque transmission flange. The friction pads are generally of the Cerametallic type.

Two guide washers disposed on respective opposite sides of the flange are mounted on a central hub fastened to the driven shaft of the gearbox. Compression coil springs are disposed circumferentially between the guide washers and the torque transmission flange. Transmission of torque and filtering of engine acyclism are effected by successive compression and relaxation of the springs.

During the clutch engagement phase it is necessary for the torque to be transmitted as progressively as possible. The clutch mechanism then applies an increasing axial compression force to the progressivity device until complete transmission of the engine torque.

However, during this phase, the segment-shaped friction pads are heavily loaded and tend to be deformed in an uncontrolled manner and then to create discontinuities in the transmission of the torque that are accompanied by a phenomenon known as judder producing very uncomfortable jerks that compromise the driving of the vehicle.

Progressivity devices including segment-shaped friction pads already exist, such as that described in particular in patent applications EP3036451 A1, GB2140881 A and GB 1418890A

That document discloses a friction clutch disk including in particular a torsional vibration damper and a progressivity device. The progressivity device is formed by segment-shaped friction pads fixed to pairs of progressive action blades, each of the progressive action blades being mounted at the periphery of a torque transmission flange.

The progressive action of the device is achieved by axial stacking of two blades, one serving as a support and the other including a bend that is deformed radially when the clutch mechanism is closed. However, this configuration is not always satisfactory because it does not enable effective solution of the technical problems mentioned above.

The disadvantages associated with this progressivity device are linked to the restricted number of friction pads and to the absence of means for retaining the progressive action blades during clutch release phases. In this phase the clutch mechanism no longer applies load to the friction pads. The end of the progressive action blade is deformed in an uncontrolled manner, which generates geometric defects. The comfort of the vehicle during clutch engaging phases is consequently degraded.

The number of bends available on the progressive action blades is also limited with the result that the overall stiffness of the progressivity device is high. The comfort of the vehicle is also degraded.

The invention aims to remedy the above technical problems by proposing an improved progressivity device with progressive action blades the deformation of which is controlled by eliminating or at least greatly limiting the risks of false parallelism of the friction pads during clutch engagement phases.

To this end, the invention proposes a progressivity device for a friction clutch disk including:
a support flange with central rotation axis X in which an annular central part is adapted to cooperate with a torsional vibration damper and an external part carries progressive action blades and friction pads fitted to the progressive action blades,
in which the progressive action blades extend circumferentially over at least one of the faces of the support flange,
characterized in that the progressive action blade has an end fixed to the external part, another end that is a free end and bends extending in an orthoradial direction relative to the rotation axis X,
the free end of the progressive action blade including a retaining means passing through the support flange, wherein wherein the free end of the progressive action blade is retained axially relative to the support flange via the retaining means when the progressivity device is free of any axial compression force.

This progressivity device according to the invention has the advantage, thanks to the disposition of the bends of the progressive action blade in the orthoradial direction, of increasing the number of bends and therefore of improving the comfort of the vehicle during the clutch engagement phase. In that phase the bends are stressed by the clutch mechanism bearing on them and are crushed isostatically. The mechanical stresses in the progressive action blade are therefore reduced.

This progressivity device according to the invention has the advantage, thanks to the retaining means, of reducing geometrical defects at the level of the friction face of the pads. The free end of the progressive action blade is guided through the support flange with the result that the centrifugal strength of the friction clutch disk is improved.

According to the invention, the free end of the progressive action blade is advantageously retained axially relative to the support flange via the retaining means when the progressivity device is free of any axial compression force. This reduces geometrical defects at the level of the friction face of the pads, which contributes to improving the comfort of the vehicle during the clutch engagement phase.

The progressive action blade advantageously includes at least two bends formed in the material delimiting the support zone of the friction pad, the bends extending in an orthoradial direction relative to the central axis X of the support flange so that the bends are crushed isostatically by bearing stresses.

The progressive action blade advantageously includes a friction pad support zone offset axially relative to the ends, the ends of said progressive action blade bearing on the face of the support flange. In this way the geometrical defects at the level of the friction face of the pads are reduced. The support zone is preferably plane.

The invention may have one or more of the features described below in combination with one another or independently of one another:
- the friction pad may have an angular segment shape;
- the friction pad may be formed of Cerametallic, sintered or organic material;
- the number of friction pads per friction face may be between 3 and 12 inclusive;
- the friction pads may be fixed by rivets or welded to the progressive action blades;
- the friction pad may be glued to an intercalary foil;
- the support zone may include orifices adapted to receive rivets for assembling the friction pads onto the progressive action blades;
- the support zone may be delimited by two parallel bends;
- the bends of the same progressive action blade may be parallel to one another and have the same axial stiffness;
- the bends may have the same width and the same height and extend symmetrically on respective opposite sides of the diametral axis of the support flange;
- the support flange may have notches in the angular sectors situated under the progressive action blade support zone so that the inertia of the progressivity device is improved;
- the progressive action blade may be made of sheet steel, the bends being perpendicular to the rolling direction of the sheet.

In accordance with another of its aspects the invention also has for subject matter a progressivity device having some or all of the features referred to above and in which the progressive action blades extend circumferentially over the two faces of the support flange. The progressive action blades may preferably be disposed axially facing one another, on respective opposite sides of the external part. This other aspect of the invention has the advantage of improving mechanical strength and reducing the overall stiffness of the progressivity device given that the number of bends is increased.

The free end of the progressive action blades disposed axially facing one another may preferably be connected together with the aid of the retaining means, the retaining means passing through an orifice formed in the external part of the support flange.

The free ends of the progressive action blades and the retaining means may advantageously be moved relative to the support flange in the orthoradial direction relative to the rotation axis X.

The progressive action blades may advantageously be fixed in pairs to the external part of the support flange, the fixing means being common to the pair of progressive action blades.

The means for fixing the progressive action blades may consist of at least one rivet connecting the end of the blades and the support flange.

For example, the means for fixing the progressive action blades may consist of a series of rivets aligned along an axis parallel to the bending line of the bends forming the support zone.

In accordance with one of its aspects, the retaining means may consist of at least one rivet fixed to the free ends of the progressive action blades disposed axially facing one another. In this instance the rivet is a retaining means common to the two progressive action blades.

The rivet may preferably slide relative to the support flange in the orthoradial direction relative to the rotation axis X.

For example, the rivet may slide along the orifice formed in the support flange.

The orifice formed in the support flange may advantageously be of oblong shape.

The rivet may preferably comprise a shoulder, the height of the shoulder defining the axial distance separating the two free ends, the axial distance being greater than the thickness of the support flange.

The retaining means may consist in crimping the rivet.

According to another of its aspects, the retaining means may consist of a bent lug at the free end of the progressive action blade, produced for example by stamping. This other aspect of the invention has the advantage of simplifying assembly of the progressivity device given that the operation of crimping the retaining means is eliminated.

The retaining means of the same pair of blades may preferably be interleaved axially in the orifice in the support flange.

For example, the bent lugs of the same pair of blades may be interleaved axially in the orifice in the support flange.

The support flange is preferably interposed axially between the bent lugs of the same pair of blades.

According to another of its aspects the invention also has for subject matter a progressivity device having some or all of the features referred to above and in which the friction pads are fixed directly to one of the faces of the support flange, facing progressive action blades disposed on the other face. This other aspect of the invention has the advantage of simplifying assembly of the progressivity device given that the number of components to be assembled is reduced. Geometrical defects resulting from assembling friction pads on one of the faces are reduced thanks to fixing the friction pads directly to the support flange.

The retaining means may preferably include a bent lug at the free end of the progressive action blade introduced on its own into an orifice formed in the support flange, the bent lug coming to bear on the support flange when the progressivity device is free of any axial compression force.

The support flange is preferably interposed axially between the free end of the progressive action blade and the bent lug.

Alternatively, the retaining means may include a rivet with a shouldered head fixed at the free end of the progressive action blade and introduced into an orifice formed in the support flange, the shouldered head of the rivet coming to bear on the opposite face of the support flange.

The shouldered head rivet may preferably slide relative to the support flange in the orthoradial direction relative to the rotation axis X.

For example, the shouldered head rivet may slide along the orifice in the support flange.

The support flange is preferably interposed axially between the free end of the progressive action blade and the shouldered head of the rivet.

According to another of its aspects, the invention also has for subject matter a friction clutch disk for motor vehicles including a torque transmission flange, two guide washers disposed on respective opposite sides of said torque transmission flange, compression coil springs bearing on the torque transmission flange and the guide washers, and a progressivity device having some or all of the features referred to above, in which the support flange is carried either by the torque transmission flange or by one of the two guide washers.

The support flange may include notches or windows surrounding the compression coil springs.

The support flange may comprise notches cut into the outside perimeter of the external part.

The invention will be better understood after reading the following description given by way of example only and with reference to the appended drawings, in which:
- [Fig. 1] is an isometric view of a friction clutch disk comprising a progressivity device in accordance with a first embodiment of the invention;
- [Fig. 2] is an exploded isometric view of the progressivity device in accordance with the first embodiment of the invention from Figure 1;
- [Fig. 3] is a front view of the progressivity device in accordance with the first embodiment of the invention from Figure 1;
- [Fig. 4] is a sectional view of the progressivity device in accordance with the first embodiment of the invention from Figure 1;
- [Fig. 5] is a partial isometric view of a friction clutch disk comprising a progressivity device in accordance with a second embodiment of the invention;
- [Fig. 6] is a sectional view of the progressivity device in accordance with the second embodiment of the invention from Figure 5;
- [Fig. 7] is a partial isometric view of a friction clutch disk comprising a progressivity device in accordance with a third embodiment of the invention;
- [Fig. 8] is a sectional view of the progressivity device in accordance with the third embodiment of the invention from Figure 7;
- [Fig. 9] is a sectional view of a progressivity device in accordance with a fourth embodiment of the invention.

In the remainder of the description and the claims the terms "front" and "rear" will be used in a non-limiting way and in order to facilitate understanding will be referred to in accordance with the direction relative to an axial orientation determined by the main axis O of rotation of the transmission of the motor vehicle and the terms "interior/internal" and "exterior/external" will be used relative to the axis O and in accordance with a radial orientation orthogonal to said axial orientation.

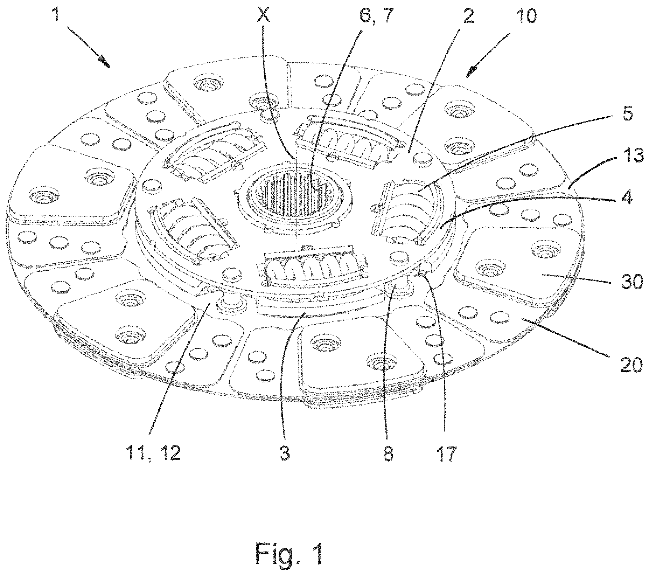

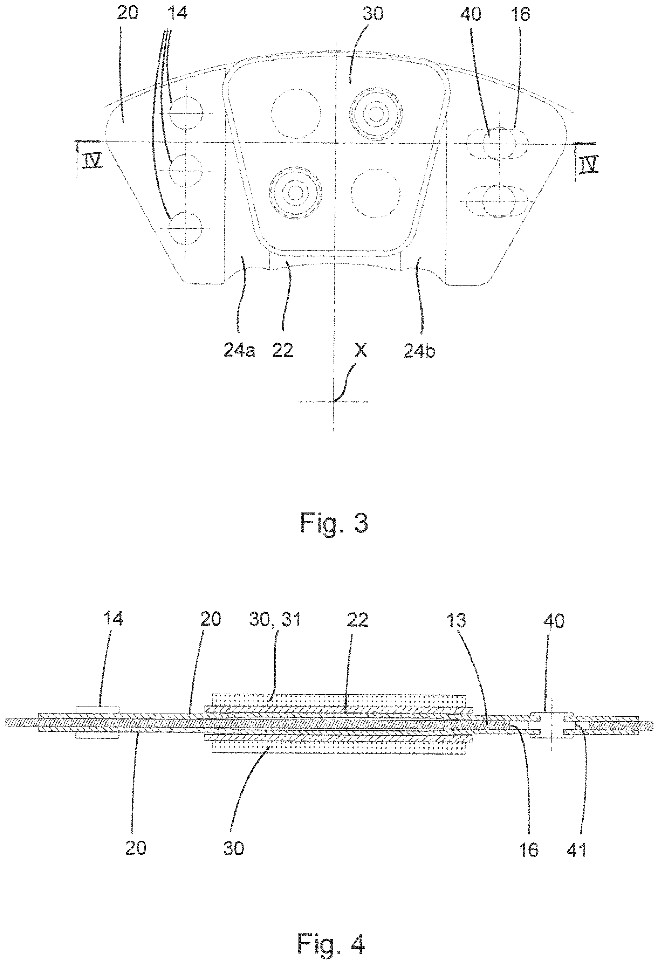

Figures 1 and 4 show a first embodiment of a friction clutch disk 1 comprising a progressivity device 10 in accordance with the invention.

The friction clutch disk 1 with rotation axis X includes a torsional vibration damper 2 conventionally including a torque transmission flange 3, guide washers 4 and compression coil springs 5. Here the friction clutch disk has a so-called "asymmetric" architecture and also includes a progressivity device 10 fitted to one of the guide washers 4. The two guide washers 4 are disposed on respective opposite sides of the torque transmission flange 3, trapping the compression coil springs 5 in intercalary housings.

A clutch mechanism fixed to the driving flywheel (not shown) applies a clamping force to the friction clutch disk 1 in such a manner as to transmit the torque produced by the engine to the gearbox.

The driving torque enters the clutch disk via the progressivity device 10 and exits via a central hub 6 disposed between the two guide washers 4. The central hub 6 is driven in rotation by the torque transmission flange 3. The central hub 6 is mounted on the driven shaft of the gearbox (not shown) and transmits the engine torque via splines 7 on its interior bore.

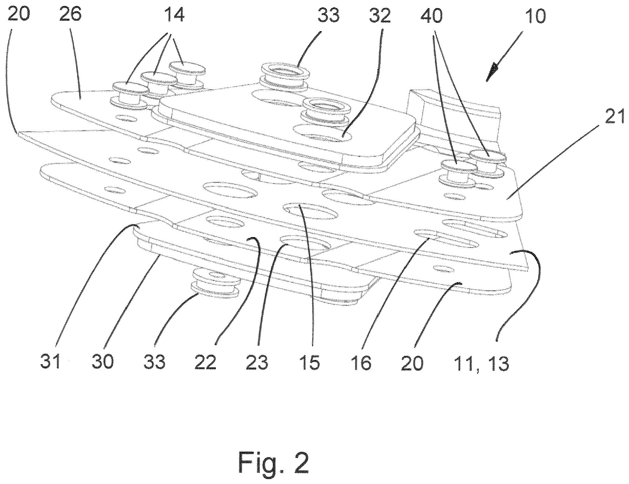

As shown in Figures 1 and 2, the progressivity device 10 in accordance with the first embodiment of the invention includes a support flange 11 with central rotation axis X carried by one of the guide washers 4, progressive action blades 20 and friction pads 30 angularly distributed around the axis X.

The support flange 11 includes an annular central part 12 adapted to cooperate with the torsional vibration damper 2 and an external part 13 carrying the progressive action blades 20. The progressive action blades 20 are fitted to an extend circumferentially around the support flange 11. Each of the progressive action blades is fixed to the external part 13 of the support flange 11 with the aid of fixing rivets 14.

In the first embodiment of the invention pairs of progressive action blades 20 are fixed to the external part 13 of the support flange, the fixing means 14 being common to the pair of progressive action blades.

The means 14 for fixing the progressive action blades may consist of at least one rivet connecting the end of the progressive action blades 20 and the support flange 11 but could equally consist of a welded or glued connection.

The support flange 11 includes notches 17 that surround the compression coil springs 5. The notches 17 are formed on the central part 12. The support flange 11 is fixed to one of the guide washers 4 with the aid of spacers 8 disposed angularly between the notches 17.

The friction pads 30 have an angular segment shape and partly cover the friction faces of the friction clutch disk 1. In this example, each of the friction faces is formed by six separate friction pads 30. In order to increase the durability of the clutch, the friction pad 30 is made of Cerametallic material. However, the friction pad could equally be made of sintered material, ceramic or an organic material. The friction pad 30 is glued onto an intercalary foil 31 for reasons of mechanical strength. In this example the friction pad is a subassembly formed of two separate layers of material, the intercalary foil 31 generally being made of steel.

As shown in Figure 2 the friction pads 30 adapted to cooperate with the friction face of the pressure plate of the clutch mechanism are riveted to the progressive action blades 20.

The intercalary foil 31 and the friction pad 30 include passage holes 32 for the rivets 33 assembling the pad onto the progressive action blade 20.

Each of the progressive action blades includes a support zone 22 for the friction pad 30 offset axially relative to the central part 12 of the support flange 11. The support zone 22 is substantially plane and includes in particular orifices 23 adapted to receive the assembly rivets 33.

In the embodiment shown in Figures 1 to 4 the progressive action blades 20 are fastened to and fixed to the support flange 11 at the level of one of the ends 26 by means of a series of fixing rivets 14 aligned along an axis parallel to the bending line of the bends 24a, 24b forming the support zone 22.

The two bends 24a, 24b in the material delimit the friction pad support zone 22. The two bends 24a, 24b in the material extend in an orthoradial direction relative to the diametral axis X of the support flange 11 so that, under bearing stresses, the bends are crushed isostatically. The orthoradial direction may be defined as being orthogonal to the rotation axis X and in particular perpendicular to the radius at which the blades 20 are mounted on the support flange 11.

The progressive action blades are made of sheet steel, the bends 24a, 24b being perpendicular to the rolling direction of the sheet. The bends of the same blade are preferably parallel to one another.

Once the progressive action blades 20 have been riveted to the support flange 11, the support zone 22 is raised by the height of the bends 24a, 24b relative to the plane of the support flange 11 formed by the external part 13. The overall stiffness of the progressivity device 10 is improved because of the presence of a large number of bends.

As shown in Figure 3, the bends 24a, 24b are the same width and the same height and extend symmetrically on respective opposite sides of the diametral axis of the support flange. The two bends 24a, 24b form identical cambers. The bends are inclined at an angle between 1° and 20° inclusive relative to the plane perpendicular to the central axis X. The inclination of the bends raises the support zone 22 between 0.5 and 1.5 mm inclusive and preferably 0.9 mm relative to the support flange 11.

Consequently, during the clutch engagement phase, when at least one of the friction faces is subject to bearing stresses, the latter are transmitted to the support zone 22 and to the bends 24a, 24b that will therefore be deformed in a controlled manner.

To be more precise, the two bends are crushed in the same direction, identically and simultaneously on all the blades 20, in the manner of hinges, causing tangential angular shifting of the friction pads the friction faces of which nevertheless remain in parallel planes, as shown in Figure 1. In this way the bends are crushed isostatically.

This selective deformation of the bends 24a, 24b of the support zone 22 enable free pivoting of the friction pads 30 of the friction face oriented toward the clutch mechanism about the rotation axis X relative to the friction face oriented in the inertia wheel direction. The friction pads therefore remain in a plane perpendicular to the axis X.

The support flange 11 may also include openings 15 or notches in the angular sectors situated under the progressive action blade support zone 22. The openings 15 or notches produce an axial housing for the assembly rivets 33 and limit the overall inertia of the progressivity device 10.

The progressive action blade 20 has a circular arc general shape with a rounded external profile coinciding with the outside diameter of the support flange 11. The progressive action blade 20 also has an end 26 fixed to the external part 13 of the support flange 11 and a free end 21. The ends 21, 26 are plane and come to rest on the external part 13 of the support flange 11.

The support zone 22 of the friction pad 30 is offset axially relative to the ends 21, 26 of the progressive action blade.

In accordance with one aspect of the invention the free end 21 of the progressive action blade 20 includes a retaining means 40 passing through the support flange.

According to the invention, the free end 21 of the progressive action blade is retained axially relative to the support flange 11 via the retaining means 40 when the progressivity device 10 is free of any axial compression force.

In accordance with the first embodiment of the invention, the retaining means consists of a rivet 40 fixed to the free ends 21 of the progressive action blades disposed axially facing one another. In the example from Figure 2, two rivets 40 form a retaining means common to the two progressive action blades.

The rivets 40 pass through orifices 16 formed in the external part 13. The orifices 16 in the support flange are of oblong shape and oriented in the orthoradial direction. The free ends of the progressive action blades and the rivets 40 are therefore moved relative to the support flange in the orthoradial direction relative to the rotation axis X during the clutch engagement phase.

In order to control the distance between the free ends of the blades, the rivet 40 includes a shoulder 41. The height of the shoulder 41 defines the axial distance separating the two free ends 21. In such a manner as to facilitate sliding, the axial distance is slightly greater than the thickness of the support flange 11.

The shoulder 41 slides in the orifice 16 of oblong shape. When the friction clutch disk 1 is subjected to a high rotation speed the shoulder 41 comes to bear on the side of the orifice 16 and limits the deformation of the progressive action blade 20.

When the clutch disk is no longer loaded by the clutch mechanism, the free ends 21 of the two blades 20 remain pressed onto the support flange, which reduces geometric defects at the level of the friction face of the pads.

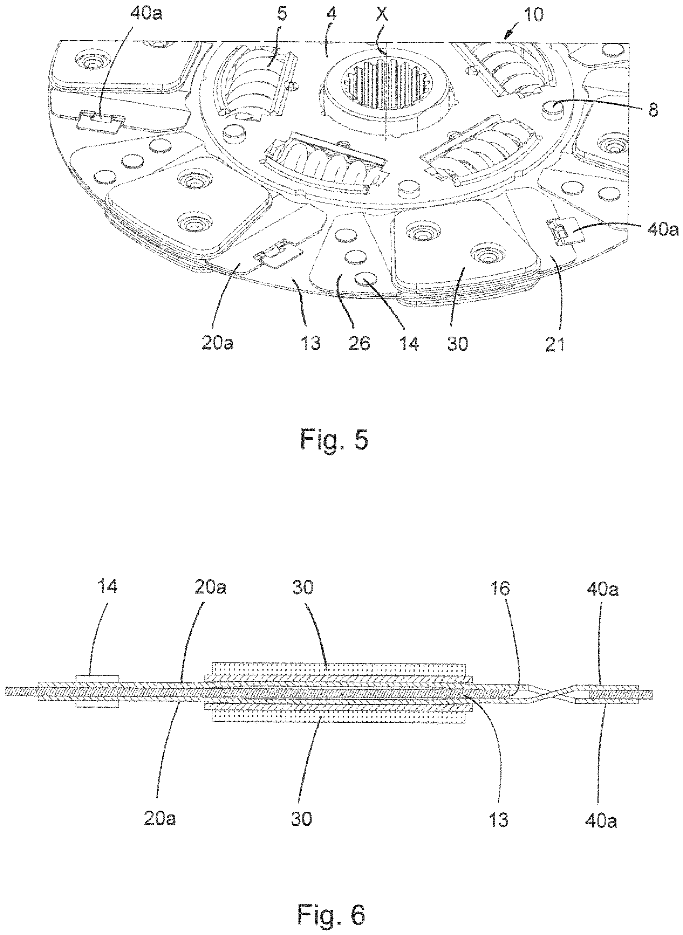

A friction clutch disk 1 comprising a progressivity device 10 according to a second embodiment of the invention in which the retaining means 40a consists of a bent lug at the free end of the progressive action blade 20a will now be described with reference to Figures 5 and 6.

This second embodiment is distinguished from that described with reference to Figure 1 in that each blade includes a bent lug 40a and the retaining means 40a of the same pair of blades 20a are interleaved axially in the orifice 16 in the support flange 11. The support flange 11 is interposed axially between the bent lugs 40a of the same pair of blades 20a.

This other embodiment has the advantage of simplifying assembly of the progressivity device. The bent lugs are preferably produced by pressing the free end of the blade. A cutting operation is sometimes necessary.

The two progressive action blades 20a advantageously have asymmetric profiles in order to enable interleaving of the free ends 21. In particular, the bent lugs 40a of the same pair of blades have complementary shapes. For example, a protrusion of the sheet metal formed in one of the bent lugs 40a penetrates into an opening formed in the other bent lug 40a.

In order to retain the free end of the progressive action blade 20a axially relative to the external part 13 the bent lug 40a comes to bear on the opposite face of the support flange. When the clutch disk is no longer loaded by the clutch mechanism the free end of the blade 20a remains pressed onto the support flange, which reduces geometric defects at the level of the friction face of the pads.

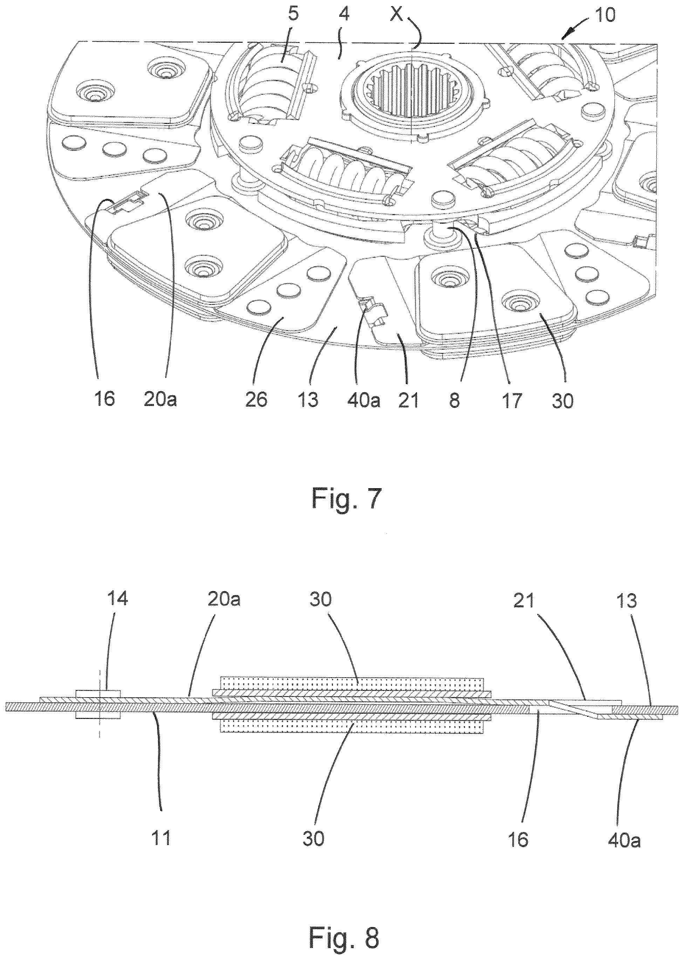

There will now be described with reference to Figures 7 and 8 a friction clutch disk 1 comprising a progressivity device 10 in accordance with a third embodiment of the invention in which friction pads 30 are fixed directly to one of the faces of the support flange, opposite the progressive action blades 20a disposed on the other face.

The progressive action blades 20a are generally disposed on the face of the support flange 11 axially facing the pressure plate of the clutch mechanism (not shown).

This third embodiment is distinguished from that described with reference to Figure 1 in that the retaining means 40a includes a bent lug at the end 21 of the progressive action blade 20a and introduced on its own into an orifice 16 in the support flange 11.

To guarantee good pressing of the free end 21 onto the external part 13 the bent lug 20a comes to bear on the support flange 11 when the progressivity device is free of any axial compression force.

The support flange 11 is preferably interposed axially between the free end 21 of the progressive action blade 20a and the bent lug 40a.

This other embodiment has the advantage of simplifying assembly of the progressivity device given that the number of components to be assembled is reduced.

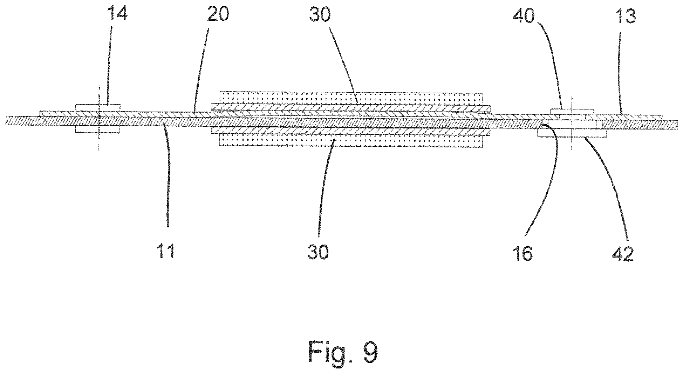

There will now be described with reference to Figure 9 a friction clutch disk 1 comprising a progressivity device 10 in accordance with a fourth embodiment of the invention that is substantially similar to the third embodiment except that the retaining means 40 includes a shouldered head rivet fixed to the free end 21 of the progressive action blade and introduced into an orifice 16 in the support flange.

In this fourth embodiment the shouldered head 42 of the rivet 40 comes to bear on the opposite face of the support flange. The rivet 40 with the shouldered head 42 slides along the orifice 16 in the support flange in the orthoradial direction relative to the rotation axis X.

To guarantee good pressing of the free end 21 onto the external part 13 the support flange 11 is interleaved axially between the free end 21 of the progressive action blade and the shouldered head 42 of the rivet 40.

## Claims

1. Progressivity device (10) for a friction clutch disk, including:
a support flange (11) with central rotation axis (X) in which an annular central part (12) is adapted to cooperate with a torsional vibration damper (2) and an external part (13) carries progressive action blades (20, 20a) and friction pads (30) fitted to the progressive action blades,
in which the progressive action blades extend circumferentially over at least one of the faces of the support flange,
**characterized in that** the progressive action blade (20, 20a) has an end (26) fixed to the external part (13), another end (21) that is a free end and bends (24a, 24b) extending in an orthoradial direction relative to the rotation axis (X), the free end (21) of the progressive action blade including a retaining means (40, 40a) passing through the support flange (11),
wherein the free end (21) of the progressive action blade (20, 20a) is retained axially relative to the support flange (11) via the retaining means (40, 40a) when the progressivity device is free of any axial compression force.

2. Progressivity device (10) according to the claim 1, **characterized in that** the progressive action blade (20, 20a) includes a friction pad support zone (22) offset axially relative to the ends (21, 26), the ends of said progressive action blade (20, 20a) bearing on the face of the support flange.

3. Progressivity device (10) according to the preceding claim, **characterized in that** the progressive action blade (20, 20a) includes at least two bends (24a, 24b) formed in the material delimiting the support zone (22) of the friction pad (30), the bends (24a, 24b) extending in an orthoradial direction relative to the central axis (X) of the support flange so that the bends are crushed isostatically by bearing stresses.

4. Progressivity device (10) according to any one of Claims 1 to 3, **characterized in that** the progressive action blades (20, 20a) extend circumferentially over of the support flange (11), the progressive action blades being disposed axially opposite one another on respective opposite sides of the external part (13).

5. Progressivity device (10) according to the preceding claim, **characterized in that** the free ends (21) of the progressive action blades (20, 20a) disposed axially opposite one another are connected together with the aid of a retaining means (40, 40a), the retaining means passing through an orifice (16) formed in the external part of the support flange.

6. Progressivity device (10) according to the preceding claim, **characterized in that** the retaining means (40) consists of at least one rivet fixed to the free ends (21).

7. Progressivity device (10) according to the preceding claim, **characterized in that** the rivet (40) slides relative to the support flange (11) in the orthoradial direction relative to the rotation axis (X).

8. Progressivity device (10) according to Claim 5, **characterized in that** the retaining means (40a) consists of a bent lug at the free end (21) of the progressive action blade (20a), formed for example by stamping.

9. Progressivity device (10) according to the preceding claim, **characterized in that** the retaining means (40a) of the same pair of blades (20a) are interleaved axially in the orifice (16) in the support flange, the support flange (11) being axially interleaved between the bent lugs (40a) of the same pair of blades.

10. Progressivity device (10) according to any one of Claims 4 to 9, **characterized in that** pairs of progressive action blades (20, 20a) are fixed to the external part of the support flange, the fixing means (14) being common to the pair of progressive action blades.

11. Progressivity device (10) according to any one of Claims 1 to 3, **characterized in that** friction pads (30) are fixed directly to one of the faces of the support flange (11) opposite progressive action blades (20, 20a) disposed on the other face.

12. Progressivity device (10) according to Claim 11, **characterized in that** the retaining means (40a) consist of a bent lug at the free end (21) of the progressive action blade (20a) introduced on its own into an orifice (16) in the support flange (11), the bent lug (40a) coming to bear on the support flange when the progressivity device is free of any axial compression force.

13. Progressivity device (10) according to Claim 11, **characterized in that** the retaining means (40) includes a rivet with a shouldered head (42) fixed to the free end (21) of the progressive action blade (20) and introduced into an orifice formed in the support flange, the shouldered head (42) of the rivet (40) coming to bear on the opposite face of the support flange.

14. Friction clutch disk (1) for motor vehicles, including a torque transmission flange (3), two guide washers (4) disposed on respective opposite sides of said torque transmission flange (3), compression coil springs (5) bearing on the torque transmission flange and the guide washers, and a progressivity device (10) according to any one of the preceding claims in which the support flange (11) is carried by the torque transmission flange (3) or by one of the two guide washers (4).

## Patentansprüche

1. Progressivitätsvorrichtung (10) für eine Reibungskupplungsscheibe, die Folgendes umfasst:
einen Stützflansch (11) mit einer zentralen Rotationsachse (X), in der ein ringförmiger zentraler Teil (12) dazu angepasst ist, mit einem Drehschwingungsdämpfer (2) zusammenzuwirken, und ein externer Teil (13) Blätter mit progressiver Wirkung (20, 20a) und Reibbeläge (30), die an den Blättern mit progressiver Wirkung befestigt sind, trägt,
wobei sich die Blätter mit progressiver Wirkung umlaufend über zumindest eine der Flächen des Stützflansches erstrecken,
**dadurch gekennzeichnet, dass** das Blatt mit progressiver Wirkung (20, 20a) ein Ende (26), das an dem externen Teil (13) befestigt ist, ein anderes Ende (21), das ein freies Ende ist, und Bögen (24a, 24b), die sich in eine orthoradiale Richtung relativ zur Rotationsachse (X) erstrecken, aufweist,
wobei das freie Ende (21) des Blattes mit progressiver Wirkung ein Haltemittel (40, 40a) umfasst, das durch den Stützflansch (11) hindurchläuft,
wobei das freie Ende (21) des Blattes mit progressiver Wirkung (20, 20a) axial relativ zum Stützflansch (11) über das Haltemittel (40, 40a) gehalten wird, wenn die Progressivitätsvorrichtung frei von jedweder axialen Kompressionskraft ist.

2. Progressivitätsvorrichtung (10) nach Anspruch 1, **dadurch gekennzeichnet, dass** das Blatt mit progressiver Wirkung (20, 20a) eine Reibbelagstützzone (22) umfasst, die axial relativ zu den Enden (21, 26) versetzt ist, wobei die Enden des Blattes mit progressiver Wirkung (20, 20a) an der Fläche des Stützflansches anliegen.

3. Progressivitätsvorrichtung (10) nach dem vorhergehenden Anspruch, **dadurch gekennzeichnet, dass** das Blatt mit progressiver Wirkung (20, 20a) mindestens zwei Bögen (24a, 24b) umfasst, die in dem Material gebildet sind, das die Stützzone (22) des Reibbelags (30) begrenzt, wobei sich die Bögen (24a, 24b) in einer orthoradialen Richtung relativ zur zentralen Achse (X) des Stützflansches erstrecken, sodass die Bögen durch Auflagerspannungen isostatisch zusammengedrückt werden.

4. Progressivitätsvorrichtung (10) nach einem der Ansprüche 1 bis 3, **dadurch gekennzeichnet, dass** sich die Blätter mit progressiver Wirkung (20, 20a) umlaufend über den Stützflansch (11) erstrecken, wobei die Blätter mit progressiver Wirkung axial einander gegenüberliegend auf entsprechenden einander gegenüberliegenden Seiten des externen Teils (13) angeordnet sind.

5. Progressivitätsvorrichtung (10) nach dem vorhergehenden Anspruch, **dadurch gekennzeichnet, dass** die freie Enden (21) der axial einander gegenüberliegend angeordneten Blätter mit progressiver Wirkung (20, 20a) mithilfe eines Haltemittels (40, 40a) miteinander verbunden sind, wobei das Haltemittel durch eine Öffnung (16) verläuft, die im externen Teil des Stützflansches gebildet ist.

6. Progressivitätsvorrichtung (10) nach dem vorhergehenden Anspruch, **dadurch gekennzeichnet, dass** das Haltemittel (40) aus zumindest einem an den freien Enden (21) befestigten Niet besteht.

7. Progressivitätsvorrichtung (10) nach dem vorhergehenden Anspruch, **dadurch gekennzeichnet, dass** der Niet (40) relativ zum Stützflansch (11) in die orthoradiale Richtung relativ zur Rotationsachse (X) gleitet.

8. Progressivitätsvorrichtung (10) nach Anspruch 5, **dadurch gekennzeichnet, dass** das Haltemittel (40a) aus einer gebogenen Öse am freien Ende (21) des Blattes mit progressiver Wirkung (20a) besteht, die beispielsweise durch Stanzen gebildet wird.

9. Progressivitätsvorrichtung (10) nach dem vorhergehenden Anspruch, **dadurch gekennzeichnet, dass** die Haltemittel (40a) des gleichen Paares von Blättern (20a) in der Öffnung (16) im Stützflansch axial verschränkt sind, wobei der Stützflansch (11) zwischen den gebogenen Ösen (40a) des gleichen Paares von Blättern axial verschränkt ist.

10. Progressivitätsvorrichtung (10) nach einem der Ansprüche 4 bis 9, **dadurch gekennzeichnet, dass** Paare von Blättern mit progressiver Wirkung (20, 20a) am externen Teil des Stützflansches befestigt sind, wobei die Befestigungsmittel (14) dem Paar von Blättern mit progressiver Wirkung gemeinsam sind.

11. Progressivitätsvorrichtung (10) nach einem der Ansprüche 1 bis 3, **dadurch gekennzeichnet, dass** Reibbeläge (30) direkt an einer der Flächen des Stützflansches (11) gegenüber Blättern mit progressiver Wirkung (20, 20a), die an der anderen Fläche angeordnet sind, befestigt sind.

12. Progressivitätsvorrichtung (10) nach Anspruch 11, **dadurch gekennzeichnet, dass** das Haltemittel (40a) aus einer gebogenen Öse am freien Ende (21) des Blattes mit progressiver Wirkung (20a) besteht, die selbst in eine Öffnung (16) im Stützflansch (11) eingeführt wird, wobei die gebogene Öse (40a) zum Anliegen am Stützflansch kommt, wenn die Progressivitätsvorrichtung frei von jedweder axialen Kompressionskraft ist.

13. Progressivitätsvorrichtung (10) nach Anspruch 11, **dadurch gekennzeichnet, dass** das Haltemittel (40) einen Niet mit einem abgesetzten Kopf (42) umfasst, befestigt am freien Ende (21) des Blattes mit progressiver Wirkung (20) und eingeführt in eine im Stützflansch gebildete Öffnung, wobei der abgesetzte Kopf (42) des Niets (40) zum Anliegen an der gegenüberliegenden Fläche des Stützflanschs kommt.

14. Reibungskupplungsscheibe (1) für Motorfahrzeuge, umfassend einen Drehmomentübertragungsflansch (3), zwei Führungsscheiben (4), angeordnet an entsprechenden, einander gegenüberliegenden Seiten des Drehmomentübertragungsflanschs (3), Schraubendruckfedern (5), die am Drehmomentübertragungsflansch und den Führungsscheiben anliegen, und eine Progressivitätsvorrichtung (10) nach einem der vorhergehenden Ansprüche, wobei der Stützflansch (11) durch den Drehmomentübertragungsflansch (3) oder durch eine der zwei Führungsscheiben (4) getragen wird.

## Revendications

1. Dispositif de progressivité (10) pour un disque d'embrayage à friction, comprenant :
un voile de support (11) à axe central de rotation (X) dans lequel une partie centrale (12) annulaire est adaptée à coopérer avec un amortisseur de vibration torsionnelle (2) et une partie externe (13) porte des pales de progressivité (20, 20a) et des plots de friction (30) rapportés sur les pales de progressivité,
dans lequel les pales de progressivité s'étendent circonférentiellement sur au moins une des faces du voile de support,
**caractérisé en ce que** la pale de progressivité(20, 20a) comprend une extrémité (26) fixée sur la partie externe (13), une autre extrémité libre (21) et des plis (24a, 24b) s'étendant selon une direction orthoradiale par rapport à l'axe de rotation (X),
l'extrémité libre (21) de la pale de progressivité comprenant un moyen de retenue (40, 40a) passant au travers du voile de support (11),
dans lequel l'extrémité libre (21) de la pale de progressivité (20, 20a) est retenue axialement par rapport au voile de support (11) par l'intermédiaire du moyen de retenue (40, 40a) lorsque le dispositif de progressivité est libéré de tout effort axial de compression.

2. Dispositif de progressivité (10) selon la revendication 1, **caractérisé en ce que** la pale de progressivité (20, 20a) comprend une zone de support (22) du plot de friction décalée axialement par rapport aux extrémités (21, 26), les extrémités de ladite pale de progressivité (20, 20a) étant en appui sur la face du voile de support.

3. Dispositif de progressivité (10) selon la revendication précédente, **caractérisé en ce que** la pale de progressivité (20, 20a) comprend au moins deux plis (24a, 24b) de matière délimitant la zone de support (22) du plot de friction (30), les plis (24a, 24b) s'étendant dans une direction orthoradiale par rapport à l'axe central (X) du voile de support de telle sorte que, sous contraintes d'appui, les plis s'écrasent de façon isostatique.

4. Dispositif de progressivité (10) selon l'une des revendications 1 à 3, **caractérisé en ce que** les pales de progressivité (20, 20a) s'étendent circonférentiellement sur les deux faces du voile de support (11), les pales de progressivité étant disposées axialement en regard l'une de l'autre, de part et d'autre de la partie externe (13).

5. Dispositif de progressivité (10) selon la revendication précédente, **caractérisé en ce que** les extrémités libres (21) des pales de progressivité (20, 20a) disposées axialement en regard l'une de l'autre sont reliées ensemble à l'aide du moyen de retenue (40, 40a), le moyen de retenue passant au travers d'un orifice (16) formé dans la partie externe du voile de support.

6. Dispositif de progressivité (10) selon la revendication précédente, **caractérisé en ce que** le moyen de retenue (40) est au moins un rivet fixé sur les extrémités libres (21).

7. Dispositif de progressivité (10) selon la revendication précédente, **caractérisé en ce que** le rivet (40) coulisse par rapport au voile de support (11) selon la direction orthoradiale par rapport à l'axe de rotation (X).

8. Dispositif de progressivité (10) selon la revendication 5, **caractérisé en ce que** le moyen de retenue (40a) est une patte pliée sur l'extrémité libre (21) de la pale de progressivité (20a), par exemple réalisée par emboutissage.

9. Dispositif de progressivité (10) selon la revendication précédente, **caractérisé en ce que** les moyens de retenue (40a) d'une même paire de pales (20a) s'enchevêtrent axialement au sein de l'orifice (16) du voile de support, le voile de support (11) étant intercalé axialement entre les pattes pliées (40a) d'une même paire de pales.

10. Dispositif de progressivité (10) selon l'une des revendications 4 à 9, **caractérisé en ce que** les pales de progressivité (20, 20a) sont fixées par paire sur la partie externe du voile de support, le moyen de fixation (14) étant commun à la paire de pales de progressivité.

11. Dispositif de progressivité (10) selon l'une des revendications 1 à 3, **caractérisé en ce que** des plots de friction (30) sont fixés directement sur une des faces du voile de support (11), en vis-à-vis de pales de progressivité (20, 20a) disposées sur l'autre face.

12. Dispositif de progressivité (10) selon la revendication 11, **caractérisé en ce que** le moyen de retenue (40a) est une patte pliée depuis l'extrémité libre (21) de la pale de progressivité (20a) et introduite seule dans un orifice (16) aménagé dans le voile de support (11), la patte pliée (40a) venant en appui sur le voile de support lorsque le dispositif de progressivité est libéré de tout effort axial de compression.

13. Dispositif de progressivité (10) selon la revendication 11, **caractérisé en ce que** le moyen de retenue (40) comprend un rivet à tête épaulée (42) fixé depuis l'extrémité libre (21) de la pale de progressivité (20) et introduit dans un orifice aménagée dans le voile de support, la tête épaulée (42) du rivet (40) venant en appui sur la face opposée du voile de support.

14. Disque d'embrayage à friction (1) pour véhicule automobile, comprenant un voile de transmission de couple (3), deux rondelles de guidage (4) disposées de part et d'autre dudit voile de transmission de couple (3), des ressorts hélicoïdaux de compression (5) en appui sur le voile de transmission de couple et les rondelles de guidage, et un dispositif de progressivité (10) selon l'une quelconque des revendications précédentes, dans lequel le voile de support (11) est porté par le voile de transmission de couple (3) ou par l'une des deux rondelles de guidage (4).
